# EUROPÄISCHE PATENTSCHRIFT

(11) **EP 1 152 368 B1**
(45) Veröffentlichungstag und Bekanntmachung des Hinweises auf die Patenterteilung: **14.07.2010**
(21) Anmeldenummer: 00109645.2
(22) Anmeldetag: 05.05.2000
(51) Int. Cl.: G06K 19/077

(54) **Chipkarte**
Chip card
Carte à puce

(43) Veröffentlichungstag der Anmeldung: 07.11.2001
(73) Patentinhaber: Infineon Technologies AG, 85579 Neubiberg (DE)
(72) Erfinder: Müller, Jochen, 93173 Wenzenbach (DE); Gundlach, Harald, 85354 Freising (DE)
(74) Vertreter: Viering, Jentschura & Partner

(56) Entgegenhaltungen:
- EP-A- 0 328 124
- EP-A- 0 488 574
- EP-A- 0 702 325
- DE-A- 19 826 428

## Beschreibung

Die Erfindung beschäftigt sich mit dem Einbringen mehrerer, zu einem System elektrisch verbundener Komponenten in einen flächigen Träger, z.B. eine Chipkarte.

Aus dem Stand der Technik sind Chipkarten bekannt, bei denen der Kartenkörper für verschiedene Komponenten, z.B. das Chipmodul, eine Anzeigevorrichtung oder eine Eingabevorrichtung, jeweils eine Ausnehmung aufweist, in die die Komponente eingesetzt wird. Die Ausnehmungen sind mit elektrischen Anschlüssen versehen, die auf elektrische Anschlüsse der jeweiligen in die Ausnehmung eingesetzten Komponente treffen. Die elektrischen Anschlüsse verschiedener Ausnehmungen - und somit die Komponenten - können untereinander über Leiterzüge miteinander verbunden sein, die im Inneren des Kartenkörpers verlaufen.

Der Kartenkörper ist häufig aus mehreren übereinander aufgebrachten Schichten hergestellt. Auf der untersten Schicht sind hierbei die Leiterzüge, z.B. durch Kaschieren und Strukturieren, aufgebracht. Die elektrischen Komponenten werden anschließend auf die unterste Schicht aufgebracht (z.B. durch Kleben oder Löten) und elektrisch mit den Leiterzügen verbunden. Anschließend wird wenigstens eine weitere Zwischenschicht mit Ausnehmungen an den Stellen der elektrischen Komponenten auf die unterste Schicht aufgebracht und z.B. durch Kleben oder Laminieren fest mit dieser verbunden. Als oberste Schicht wird eine vollflächige Deckschicht, d.h. eine Schicht ohne Ausnehmungen, auf die Zwischenschicht(en) aufgebracht. Eine derartige Anordnung ist beispielsweise in der EP 0 706 152 B1 beschrieben.

Nachteilig ist das komplizierte Herstellungsverfahren derartiger Chipkarten mit entsprechend hohen Kosten und Toleranzen. Weiterhin kann eine Funktionsprüfung der Chipkarte erst nach dem Einbringen aller elektrischen Komponenten in den Kartenkörper erfolgen. Ist nur eine einzige elektrische Komponente defekt, so muß die an sich fertige Chipkarte als Ausschuß weggeworfen werden, wodurch sich die spezifischen Herstellungskosten erhöhen.

Aus der EP 0 481 776 A2 ist eine kontaktlose Chipkarte bekannt, bei der die Leiterzüge und alle elektrischen Komponenten (Chip, Widerstände, Kondenstoren, Energiespeicher und Antenne) auf einem TAB-Träger aufgebracht sind. Nach einer positiven elektrischen Funktionsprüfung wird der TAB-Träger mit den elektrischen Komponenten mit einer Vergußmasse umhüllt. Das mit einer Umhüllung umgebene Modul wird in eine Ausnehmung eines Trägerkörpers eingesetzt und mechanisch mit dieser verbunden. Schließlich ist noch eine Abdeckung auf dem Modul vorgesehen. Die in der EP 0 481 776 A2 beschriebene Chipkarte und das Herstellungsverfahren eignen sich jedoch nicht für eine kontaktbehaftete oder hybride Chipkarte, da die Komponenten im Inneren der Chipkarte.

JP61177586 schlägt eine Chipkarte mit einem Kartenkörper vor, in den wenigstens eine jeweils mehrere elektrische Komponenten aufweisende Systemkomponente einbringbar ist, die die elektrischen Funktionen für den Betrieb der Chipkarte auf sich vereint, wobei die elektrischen Komponenten der Systemkomponente auf einer Leiterzüge aufweisenden Grundplatte aufgebracht sind.

Aufgabe der Erfindung ist es, eine für den kontaktbehafteten oder hybriden Betrieb vorgesehene Chipkarte mit einfacherem Aufbau und vereinfachtem Herstellungsverfahren anzugeben, welches eine kostengünstige Fertigung ermöglicht.

Diese Aufgabe wird mit den Merkmalen des Anspruches 1 gelöst.

Die Erfindung sieht also vor, in die Chipkarte eine Systemkomponente einzusetzen, die keinerlei elektrische Verbindung zu dem Trägerkörper der Chipkarte aufweist. Ermöglicht wird dies dadurch, daß die verschiedenen elektrischen Komponenten in der Systemkomponente integriert und zu einem System elektrisch miteinander verbunden sind. Die Systemkomponente ist dabei natürlich gegenüber einer Einzelkomponente größer ausgebildet. Mit anderen Worten bedeutet dies, anstatt einzelne Komponenten in die Chipkarte einzusetzen und diese über Leiterbahnen in dem Kartenkörper miteinander elektrisch zu verbinden, eine vorab zusammengefügte - und elektrisch auf ihre Funktionsfähigkeit überprüfbare - Systemkomponente in die Chipkarte einzusetzen.

Als elektrische Komponenten kommen hierbei ein Chipmodul mit externen Kontakten, eine Antennenspule, eine Anzeigevorrichtung, eine Eingabevorrichtung, ein Energiespeicher oder -wandler, Sensoren (z.B. Fingerprintsensor) und so weiter in Betracht.

Das elektrische Gesamtsystem, bestehend aus allen für die erwünschte Funktionalität notwendigen Komponenten, ist somit vorteilhafterweise vor dem Einbringen der Systemkomponente in den Trägerkörper der Chipkarte auf die elektrische Funktionsfähigkeit überprüfbar oder in seinen elektrischen Eigenschaften noch einstellbar. Bei einem Defekt einer einzelnen Komponente muß lediglich die Systemkomponente als Ausschuß verworfen werden. Da die mechanische Verbindung mit dem Trägerkörper erst nach der bestandenen Prüfung der Funktionsfähigkeit stattfindet, müssen keine Trägerkörper als Ausschuß verworfen werden. Hierdurch können die spezifischen Herstellungskosten einer Chipkarte gesenkt werden.

Die Prüfung des elektrischen Gesamtsystem vor dem Einbau in den Trägerkörper ist vor allem dann interessant, wenn die mechanische Verbindung der Systemkomponente und des Trägerkörpers durch unterschiedliche Firmen erfolgt.

Die mechanische Verbindung von Trägerkörper und Systemkomponente kann beispielsweise durch Kleben oder Laminieren erfolgen.

Die Systemkomponente ist vorzugsweise so vorbereitet, daß diejenigen Einzelkomponenten, die bedienbar oder sichtbar sein müssen, mit der Oberfläche der Systemkomponente - innerhalb zulässiger Höhentoleranzen - höhengleich sind. Vorteilhafterweise schließt die Oberfläche der Systemkomponenteebenfalls innerhalb zulässiger Höhentoleranzen - höhengleich mit der Oberfläche des Kartenkörpers ab. Dementsprechend kann es notwendig sein, zumindest einige der elektrischen Komponenten vor dem Einbau in der Systemkomponente mit einem Gehäuse oder mit einem Sockel zu versehen.

Dadurch, daß die Systemkomponente (im Rahmen der zulässigen Toleranzen) mit der Oberseite des Trägerkörpers in etwa bündig abschließt, braucht keine Deckschicht mehr vorgesehen werden. Hierdurch kann ein Herstellungsschritt eingespart werden. Die Deckschicht kann auch deshalb wegfallen, damit die elektrischen Komponenten, wie z.B. das Chipmodul, eine Eingabevorrichtung, ein Energiewandler in Form einer Solarzelle von Haus aus von der Oberseite aus zugänglich sind.

Weitere vorteilhafte Ausgestaltungen ergeben sich aus den untergeordneten Ansprüchen.

Um einen möglichst einfachen Aufbau der Chipkarte zu ermöglichen weist der Trägerkörper zumindest eine Ausnehmung auf, in die die Systemkomponente einbringbar ist. Die Größe der Ausnehmung ist dabei an die Abmaße der Systemkomponente angepaßt.

Idealerweise wird in die Chipkarte nur eine einzige Systemkomponente eingesetzt, deren elektrische Komponenten dann miteinander verbunden sein können. Ist eine elektrische Verbindung einzelner elektrischer Komponenten nicht notwendig, können diese auch auf mehreren Systemkomponenten angeordnet sein und in jeweilige Ausnehmungen des Trägerkörpers eingesetzt werden. Dabei kann für jede Systemkomponente genau eine Ausnehmung vorgesehen sein, es können jedoch auch mehrere Systemkomponenten unmittelbar nebeneinander liegend in eine entsprechend ausgebildete Ausnehmung eingesetzt werden.

Der mit wenigstens einer Ausnehmung versehene Trägerkörper kann einstückig ausgebildet sein. Die Ausnehmung kann beispielsweise gefräst sein.

Alternativ kann der Trägerkörper aus einer Basisschicht bestehen, auf der die zumindest eine Systemkomponente aufgebracht ist und aus zumindest einer weiteren Schicht, die an den Stellen der elektrischen Komponenten der Systemkomponente eine Aussparung aufweist. Die Verbindung zwischen der Basisschicht und der weiteren Schicht kann auf die bekannten Weisen, z.B. Verkleben, Laminieren, usw. erfolgen.

Sind die elektrischen Komponenten in einer Ausgestaltungsvariante unmittelbar nebeneinander, d.h. ohne einen Zwischenraum, gelegen, so ist die weitere Schicht als ein umlaufender Rahmen ausgebildet.

Sind die elektrischen Komponenten der Systemkomponente in einer anderen Ausgestaltungsvariante zueinander beabstandet gelegen, so besteht zwischen diesen ein Zwischenraum, der durch einen Lückenfüller geschlossen ist. Der Lückenfüller besteht vorteilhafterweise aus demselben Material wie die Basis- und die weitere Schicht. Der Lückenfüller kann dabei Teil der weiteren Schicht sein, so daß die weitere Schicht Ausnehmungen an den Stellen der elektrischen Komponenten aufweist.

Die elektrischen Komponenten einer Systemkomponente sind vorteilhafterweise auf einer Leiterzüge aufweisenden Grundplatte aufgebracht. Die Leiterzüge können sowohl zur elektrischen Verbindung der auf der Grundplatte aufgebrachten elektrischen Komponenten dienen als auch Teil einer Antennenspule für den drahtlosen Datenaustausch sein.

Gegenüber einer herkömmlichen Chipkarte ist die Präzision beim Aufbringen bzw. Positionieren der Leiterbahnen auf der Grundplatte erhöhbar, da die Werkzeuge für die Herstellung gewöhnlicher Leiterplatten verwendbar sind. Als Grundplatten der Systemkomponente kommen deshalb vorteilhafterweise Leiterplatten, insbesondere flexible Leiterplatten (sogenannte Flex-Leiterplatten), z.B. aus FR4, in Betracht.

Die bei der Herstellung der aus dem Stand der Technik bekannten Chipkarten notwendigen Anforderungen an einen äußerst exakten Laminierungsprozeß der Leiterzüge, welche gewöhnlich auf einem Inlay ausgeführt sind, sind in dem Trägerkörper der Chipkarte nicht mehr erforderlich. Deshalb können auf dem Grundkörper der Systemkomponente mehr Kontakte bzw. kleinere Kontaktflächen verwendet werden.

Zur Bestückung der Systemkomponente können gewöhnliche Leiterplatten-Bestückungsautomaten verwendet werden. Diese sind in der Lage, hochoptimiert zu günstigen Kosten zu arbeiten.

Die Grundplatte selbst kann in einer weiteren Ausgestaltung eine oder mehrere Ausnehmungen zur Aufnahme von z.B. Halbleiterchips aufweisen. Diese Variante ermöglicht die Einhaltung der Forderung einer ebenen Oberseite der Chipkarte, wenn die elektrische Komponente ansonsten eine zu große Höhe aufweisen würde.

Anhand der nachfolgenden Figuren wird die Erfindung und deren Vorteil weiter erläutert. Es zeigen:
- Figuren 1 bis 4: verschiedene Ausgestaltungsformen von Trä- gerkörpern einer Chipkarte und den jewei- ligen Systemkomponenten in einer schemati- schen Darstellung,
- Figur 5: eine Draufsicht auf eine beispielhafte Grundplatte für den Einsatz in der erfin- dungsgemäßen Chipkarte und
- Figur 6: eine aus dem Stand der Technik bekannte Anordnung von Kartenkörper und einzelnen Komponenten einer Chipkarte.

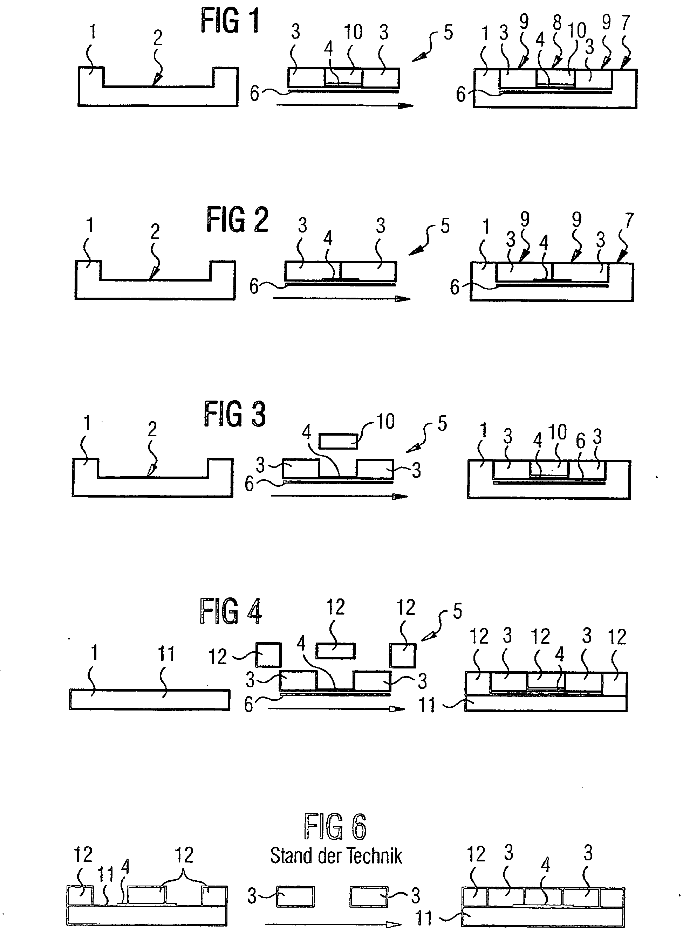

Die Figuren 1 bis 4 zeigen verschiedene Ausgestaltungsformen der Erfindung, wobei die in den Figuren gezeigten Querschnitte keine maßstabsgetreue Darstellung sind.

Ein einstückig oder aus mehreren Lagen bestehender Kartenkörper 1 weist gemäß den Figuren 1, 2 und 3 eine Ausnehmung 2 auf. Die Ausnehmung 2, die keine elektrischen Kontakte zu haben braucht, dient zur Aufnahme einer Systemkomponente 5. Die Systemkomponente 5 weist auf einer Grundplatte 6 verschiedene Komponenten 3 auf, beispielsweise ein Chipmodul mit Kontaktflächen für die externe Kontaktierung und/oder eine Anzeigevorrichtung und/oder eine Eingabevorrichtung und/oder eine Antennenspule für die kontaktlose Datenübertragung und/oder weitere Komponenten, wobei diese in den Figuren nicht näher dargestellt sind. Die auf der Systemkomponente 5 vorhandenen Komponenten können, müssen aber nicht, untereinander elektrisch über auf der Grundplatte 6 aufgebrachte Leiterzüge 4 verbunden sein. Die Grundplatte 6 ist vorzugsweise ein leiterplatten-ähnlicher Träger, z.B. eine flexible Leiterplatte aus FR4.

Besteht zwischen verschiedenen elektrischen Komponenten 3 ein Abstand, wie in den Figuren 1 und 3 dargestellt, so wird dieser mit einem Lückenfüller 10 geschlossen. Dieser besteht vorzugsweise aus dem gleichen Material wie der Trägerkörper. Der Lückenfüller 10 kann gleichzeitig mit den elektrischen Komponenten 3 auf die Grundplatte 6 aufgebracht werden (Figur 1), er kann jedoch auch nach dem Aufbringen der elektrischen Komponenten 3 auf die Grundplatte 6 aufgebracht werden (Figur 3). In jedem Fall schließt der Lückenfüller 10 mit seiner Oberseite 8 (im Rahmen der zulässigen Toleranzen) in etwa bündig mit den Oberseiten 9 der elektrischen Komponenten 3 ab.

In den Figuren 1 und 3 sind die elektrischen Komponenten 3 jeweils in einem Randbereich der Grundplatte 6 gelegen. Dieses Ausführungsbeispiel stellt jedoch nur eine von vielen Möglichkeiten dar. Die elektrischen Komponenten könnten auch stärker zu einem inneren Bereich der Grundplatte 6 zugewandt sein, so daß auf der Grundplatte ein freier, vollständiger oder teilweiser umlaufender Rand entsteht. In diesem Fall könnte der Lückenfüller 10 auch als eine an die Größe der Grundplatte 6 angepaßte Schicht ausgebildet sein, die an den Stellen der elektrischen Komponenten 3 dann Ausnehmungen enthält.

Figur 2 zeigt ein alternatives Ausführungsbeispiel, bei dem die elektrischen Komponenten unmittelbar aneinander stoßen, so daß kein Zwischenraum entsteht. Die Grundplatte 6 ist dabei an die Gesamtgröße bzw. -abmaße der elektrischen Komponenten 3 angepaßt. Die nebeneinander auf der Grundplatte 6 angeordneten elektrischen Komponenten 3 sind ebenfalls in ihrer Höhe aneinander angeglichen. Es kann deshalb notwendig sein, daß einige oder alle der elektrischen Komponenten 3 in einem Gehäuse, z.B. aus einer Vergußmasse, untergebracht sind, um Höhenunterschiede auszugleichen.

In allen gezeigten Varianten ist es vorstellbar, daß die Grundplatte an den Stellen der elektrischen Komponenten 3 Ausnehmungen (in den Figuren 1 bis 4 nicht ersichtlich) aufweist, in die beispielsweise ein Halbleiterchip gehäust oder ungehäust reichen kann.

Die maximale Höhe der Grundplatte mit den darauf befindlichen elektrischen Komponenten 3 darf eine Höhe von ca. 700 µm nicht übersteigen, damit die bei Chipkarten genormte Höhe von 800 µm nicht überschritten wird.

Nach der positiven elektrischen Funktionsprüfung wird die Systemkomponente 5 in die Ausnehmung 2 des Kartenkörpers eingebracht und mit dieser mechanisch fest verbunden. Die Verbindung kann durch Laminieren, Kleben oder jede andere geeignete Verbindungstechnik erfolgen.

Es ist denkbar, elektrische Komponenten zu Funktionseinheiten zusammenzufassen und als Systemkomponente herzustellen. Somit sind diejenigen Komponenten, die einer elektrischen Verbindung bedürfen, in einer Systemkomponente realisiert, wobei ein Kartenkörper mit mehreren Systemkomponenten ausgestattet werden kann. Diese mehreren Systemkomponenten können in einer einzigen Ausnehmung 2 des Kartenkörpers eingebracht oder jeweils in einer eigenen Ausnehmung platziert sein. Nach wie vor ist es jedoch möglich, die zu einer Funktionseinheit zusammengefaßten Komponenten, vor der Montage mit dem Kartenkörper auf die elektrische Funktionsfähigkeit zu überprüfen.

Der Trägerkörper der Chipkarte muß nicht notwendigerweise, wie in den Figuren 1 bis 3 gezeigt, eine Ausnehmung aufweisen. Gemäß dem Ausführungsbeispiel nach Figur 4 kann der Trägerkörper eine eben ausgebildete Basisschicht 11 aufweisen. Die Systemkomponente 5 könnte dann in ihren Abmaßen an die Fläche des Kartenkörpers angepaßt und bündig mit den Rändern mit diesem verbunden sein. Sollte die Systemkomponente, wie in Figur 4 gezeigt, in den lateralen Abmaßen kleiner als die Basisschicht 11 sein, so wird der freibleibende Rand mit einer bzw. mehreren weiteren Schichten 12, welche eine Aussparung für die Systemkomponente aufweist bzw. aufweisen, ausgefüllt. Hierdurch wird zudem die auf der Basisschicht 11 aufgebrachte Systemkomponente fixiert. Dieser mehrschichtige Aufbau ist - abgesehen von der höhenangepaßten Systemkomponente für den Abschluß mit der Oberfläche - aus dem Stand der Technik bekannt. Die Erfindung bietet jedoch den Vorteil, daß eine elektrische Funktionsprüfung vor dem Verbinden der Systemkomponente 5 mit der Basisschicht 11 vorgenommen werden kann.

Die weitere Schicht 12 könnte auch als umlaufende Schicht ausgebildet sein, während der Zwischenraum zwischen den elektrischen Komponenten 12 durch einen separaten Lückenfüller 12 geschlossen wird.

Wie aus den rechts gelegenen Darstellungen der Figuren 1 bis 4 hervorgeht, schließen die Systemkomponente und die Oberseite 7 des Trägerkörpers 1 nach dem Schritt der mechanischen Verbindung miteinander bündig (im Rahmen der zulässigen Toleranzen) ab. Somit ist eine Deckschicht auf der weiteren Schicht 12 entbehrlich.

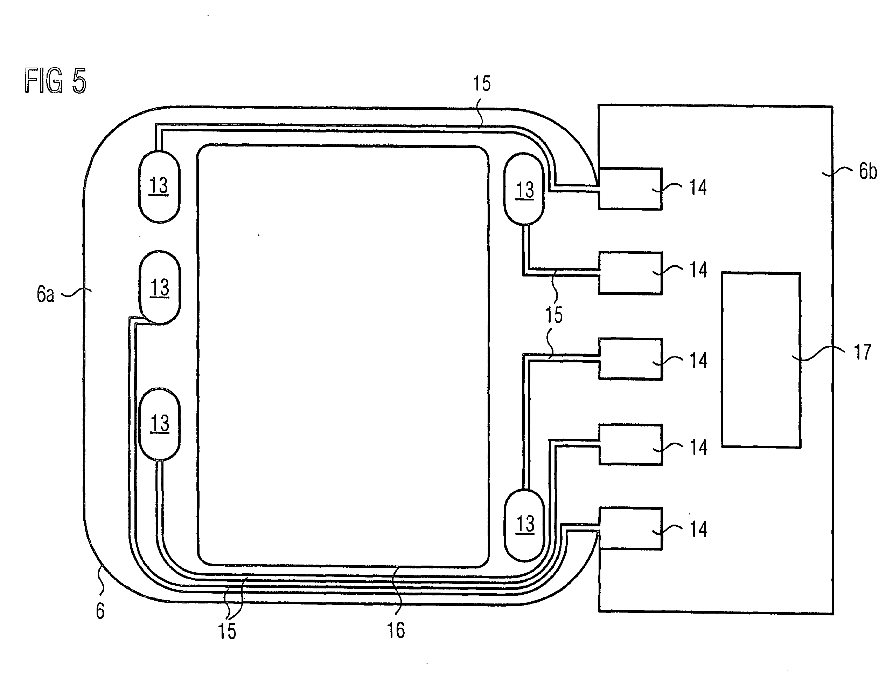

Figur 5 zeigt in einer Draufsicht eine exemplarische Ausgestaltung einer Grundplatte 6, die zur Aufnahme eines bekannten Chipmodules und einer Anzeigevorrichtung vorgesehen ist. Die Grundplatte 6 weist zwei Bereiche 6a, 6b auf, wobei der Bereich 6a zur Aufnahme des Chipmodules vorgesehen ist und an dessen Abmaße angepaßt ist. Der Bereich 6b dient zur Aufnahme und elektrischen Kontaktierung der Anzeigevorrichtung. Dieser Bereich kann, muß aber nicht, an die Abmaße der Anzeigevorrichtung angepaßt sein. Die Grundplatte 6 ist im vorliegenden Beispiel derart gestaltet, daß die beiden elektrischen Komponenten unmittelbar nebeneinander zum Liegen kommen.

Der Bereich 6a weist eine Ausnehmung 16 auf, die zur Aufnahme des Halbleiterchips des Chipmodules dient. Im vorliegenden Ausführungsbeispiel wird angenommen, daß auch die Anzeigevorrichtung über einen Halbleiterchip verfügt, der ebenfalls in eine Ausnehmung 17 in dem Bereich 6b reicht.

Jeder Bereich 6a, 6b ist mit Kontaktflecken 13 bzw. 14, versehen, die über Leiterzüge 15 miteinander elektrisch verbunden sind. Die Kontaktflecken 13, 14 befinden sich an Stellen, an denen sie auf entsprechend ausgebildete elektrische Kontakte des Chipmodules bzw. der Anzeigevorrichtung treffen. Hierdurch sind das Chipmodul und die Anzeigevorrichtung bzw. die jeweiligen Halbleiterchips elektrisch miteinander verbunden. Die elektrische Verbindung zwischen den Kontaktflecken 13, 14 kann auf bekannte Weise, z.B. über Lotkugeln, Leitkleber oder ähnlichem, erfolgen.

Wie aus der Figur 5 gut zu ersehen ist, muß die Grundplatte 6 nicht notwendigerweise eine rechteckige Form aufweisen, sondern kann individuell an die darauf zu platzierenden elektrischen Komponenten angepaßt sein.

Die Figur 6 zeigt eine aus dem Stand der Technik bekannte Anordnung, bei der der Trägerkörper 1 mehrere Aussparungen 2 aufweist. Jede der Aussparungen 2 nimmt eine elektrische Komponente auf, die mit elektrischen Anschlüssen in der Ausnehmung 2 verbunden ist. Über Leiterzüge 4, die in dem Kartenkörper 1 vorgesehen sind, wird eine elektrische Verbindung zwischen den Komponenten 3 hergestellt.

Üblicherweise besteht der Kartenkörper 1 aus mehreren übereinander angeordneten Schichten, wobei auf der untersten, ebenen Schicht die Leiterzüge 4 aufgebracht sind. Erst nach dem Aufbringen der Leiterzüge 4 wird eine oder mehrere mit den Ausnehmungen 2 versehene weitere Schicht auf der ebenen Schicht aufgebracht. Anschließend werden die elektrischen Komponenten 3 in die Ausnehmungen eingebracht und elektrisch mit den Leiterzügen 4 verbunden.

Es ist auch üblich, zuerst die elektrischen Komponenten 3 auf der untersten Schicht aufzubringen und die elektrischen Verbindung herzustellen und anschließend die weitere Schicht mit den Ausnehmungen an den Stellen der elektrischen Komponenten auf die unterste Schicht aufzubringen.

Erst jetzt ist eine elektrische Funktionsprüfung möglich. Bei einer defekten Komponente muß die gesamte Chipkarte verworfen werden. Zudem ist in der Regel eine in der Figur 6 nicht gezeigte Deckschicht notwendig, um eine ebene Oberfläche der Chipkarte zu erzielen.

## Patentansprüche

1. Chipkarte mit einem Trägerkörper (1), in den wenigstens eine jeweils mehrere elektrische Komponenten (3) aufweisende Systemkomponente (5) einbringbar ist, die die elektrischen Funktionen für den Betrieb der Chipkarte auf sich vereint, wobei die elektrischen Komponenten (3) der Systemkomponente (5) auf einer Leiterzüge (4) aufweisenden Grundplatte (6) aufgebracht sind,
**dadurch gekennzeichnet, daß**
die Systemkomponente (5) mit der Oberseite (7) des Trägerkörpers (1) in etwa bündig abschließt und wenigstens eine der elektrischen Komponenten (3) von der Oberseite (7) zugänglich ist.

2. Chipkarte nach Anspruch 1,
**dadurch gekennzeichnet, daß**
die von der Oberseite (7) zugänglichen elektrischen Komponenten (3) mit der Oberfläche der Systemkomponente höhengleich sind.

3. Chipkarte nach Anspruch 1 oder 2,
**dadurch gekennzeichnet, daß**
der Trägerkörper (1) zumindest eine Ausnehmung (2) aufweist, in die die Systemkomponente (5) einbringbar ist.

4. Chipkarte nach Anspruch 3,
**dadurch gekennzeichnet, daß**
in jede Ausnehmung (2) wenigstens eine Systemkomponente (5) mit jeweils mehreren elektrischen Komponenten (3) einbringbar ist, wobei die Systemkomponenten (5) in keinem galvanischen Kontakt stehen.

5. Chipkarte nach Anspruch 1,
**dadurch gekennzeichnet, daß**
der Trägerkörper (1) aus einer Basischicht (11), auf der die zumindest eine Systemkomponente (5) aufgebracht ist und aus zumindest einer weiteren Schicht (12), die an den Stellen der elektrischen Komponenten (3) der Systemkomponente (5) eine Aussparung aufweist, besteht.

6. Chipkarte nach einem der Ansprüche 1 bis 5,
**dadurch gekennzeichnet, daß**
die elektrischen Komponenten (3) über die Leiterzüge (4) bedarfsweise elektrisch miteinander verbunden sind.

7. Chipkarte nach einem der Ansprüche 1 bis 6,
**dadurch gekennzeichnet, daß**
die elektrischen Komponenten (3) unmittelbar nebeneinander gelegen sind, so dass kein Zwischenraum entsteht.

8. Chipkarte nach einem der Ansprüche 1 bis 6,
**dadurch gekennzeichnet, daß**
die elektrischen Komponenten (3) zueinander beabstandet sind und der Zwischenraum mit einem Lückenfüller (10) ausgefüllt ist, der mit seiner Oberseite in etwa bündig mit der Oberseite (9) der elektrischen Komponenten (3) abschließt.

9. Chipkarte nach einem der Ansprüche 5 bis 8,
**dadurch gekennzeichnet, daß**
die Grundplatte (6) Ausnehmungen (16, 17) zur Aufnahme von Teilen der elektrischen Komponenten (3) aufweist.

10. Chipkarte nach einem der Ansprüche 1 bis 9,
**dadurch gekennzeichnet, daß**
zumindest einige der elektrischen Komponenten (3) einer Systemkomponente (5) von einem Gehäuse umgeben oder auf einem Sockel befestigt sind, deren Abmessungen so gewählt sind, dass die elektrischen Komponenten (3) in ihrer Höhe aneinander angeglichen sind.

## Claims

1. Chip card comprising a support body (1), into which at least one system component (5) may be inserted, each respectively comprising a plurality of electrical components (3), the at least one system component (5) unifying the electrical functions for the operation of the chip card, wherein the electrical components (3) of the system component (5) are applied to a base plate (6) comprising conductor tracks (4),
**characterized in that**
the system component (5) terminates substantially flush with the upper side (7) of the support body (1) and at least one of the electrical components (3) is accessible from the upper side (7).

2. Chip card according to claim 1,
**characterized in that**
the electrical components (3) being accessible from the upper side (7) are equal in height with the upper surface of the system component.

3. Chip card according to claim 1 or 2,
**characterized in that**
the support body (1) comprises at least one recess (2) into which the system component (5) is insertable.

4. Chip card according to claim 3,
**characterized in that**
at least one system component (5) having respectively a plurality of electrical components (3) is insertable into each recess (2), wherein the system components (5) are in no galvanic contact with each other.

5. Chip card according to claim 1,
**characterized in that**
the support body (1) consists of a base layer (11), onto which the at least one system component (5) is applied, and of at least one further layer (12), which comprises a recess at the positions of the electrical components (3) of the system component (5).

6. Chip card according to any one of the claims 1 to 5,
**characterized in that**
the electrical components (3) are electrically connected via the conductor tracks (4) if needed.

7. Chip card according to any one of the claims 1 to 6,
**characterized in that**
the electrical components (3) are arranged immediately next to each other so that no interspace is formed.

8. Chip card according to any one of the claims 1 to 6,
**characterized in that**
the electrical components (3) are arranged at a distance from each other and the interspace is filled with an interspace filler (10), which terminates with its upper side substantially flush with the upper side (9) of the electrical components (3).

9. Chip card according to any one of the claims 5 to 8,
**characterized in that**
the base plate (6) comprises recesses (16, 17) for receiving parts of the electrical components (3).

10. Chip card according to any one of the claims 1 to 9,
**characterized in that**
at least some of the electrical components (3) of a system component are encased by a housing or are fixed to a base, the dimensions of which are selected such that the electrical components (3) are aligned with each other in their heights.

## Revendications

1. Carte à puce comprenant un corps (1) de support dans lequel peut être introduit au moins un composant (5) de système ayant plusieurs composants (3) électrique et réunissant sur soi les fonctions électriques pour le fonctionnement de la carte à puce, les composants (3) électriques du composant (5) de système étant déposés sur une plaque (6) de base ayant des pistes (4) conductrices,
**caractérisée en ce que**
le composant (5) de système est à peu près à affleurement avec la face (7) supérieure du corps (1) de support et au moins l'un des composants (3) électriques est accessible par la face (7) supérieure.

2. Carte à puce suivant la revendication 1,
**caractérisée en ce que**
les composants (3) électriques accessibles par la face (7) supérieure sont au même niveau que la surface du composant de système.

3. Carte à puce suivant la revendication 1 ou 2,
**caractérisée en ce que**
le corps (1) de support a au moins un évidement (2) dans lequel le composant (5) de système peut être introduit.

4. Carte à puce suivant la revendication 3,
**caractérisée en ce que**
au moins un composant (5) de système ayant respectivement plusieurs composants (3) électriques peut être introduit dans chaque évidement (2), les composants (5) de système n'étant pas en contact galvanique.

5. Carte à puce suivant la revendication 1,
**caractérisée en ce que**
le corps (1) de support est constitué d'une couche (11) de base, sur laquelle est déposé le au moins un composant de système, et d'au moins une autre couche (12) qui a un évidement aux emplacements des composants (3) électriques du composant (5) de système.

6. Carte à puce suivant l'une des revendications 1 à 5,
**caractérisée en ce que**
les composants (3) électriques sont reliés électriquement entre eux selon les besoins par les pistes (4) conductrices.

7. Carte à puce suivant l'une des revendications 1 à 6,
**caractérisée en ce que**
les composants (3) électriques sont mis directement les uns à côté des autres de manière à ne pas créer d'espace intermédiaire.

8. Carte à puce suivant l'une des revendications 1 à 6,
**caractérisée en ce que**
les composants (3) électriques sont à distance les uns des autres et l'espace intermédiaire est rempli d'une charge (10) de lacune qui par sa face supérieure est à peu près à affleurement avec la face (9) supérieure des composants (3) électriques.

9. Carte à puce suivant l'une des revendications 5 à 8,
**caractérisée en ce que**
la plaque (6) de base a des évidements (16, 17) de réception de parties des composants (3) électriques.

10. Carte à puce suivant l'une des revendications 1 à 9,
**caractérisée en ce que**
au moins certains des composants (3) électriques d'un composant (5) de système sont entourés d'un boîtier où sont fixés sur un socle dont les dimensions sont choisies de manière à ce que les niveaux des composants (3) électriques soient égalisés entre eux.
